# EUROPÄISCHE PATENTANMELDUNG

(11) **EP 0 521 275 A1**
(43) Veröffentlichungstag der Anmeldung: **07.01.1993**
(21) Anmeldenummer: 92108130.3
(22) Anmeldetag: 14.05.1992
(51) Int. Cl.: B60K 23/08

(54) **Verfahren und Antriebsanordnung zur Ausübung des Verfahrens zur Steuerung der Zu- und Abschaltung des Vierradantriebs eines Fahrzeuges, insbesondere eines Traktors**

(30) Priorität: 29.06.1991 DE 4121629
(71) Anmelder: Jean Walterscheid Gesellschaft mit beschränkter Haftung, D-53784 Lohmar (DE)
(72) Erfinder: Kämpf, Klaus, W-5204 Lohmar 1 (DE); Langen, Hans-Jürgen, Dr., W-5020 Frechen (DE); Geisthoff, Hubert, W-5204 Lohmar (DE)
(74) Vertreter: Harwardt, Günther, Dipl.-Ing.

(57) **Zusammenfassung**

Die Erfindung betrifft ein Verfahren zur Steuerung der Zu- und Abschaltung des Vierradantriebs eines Traktors, bei dem der Antrieb für die nicht ständig angetriebenen, gelenkten Räder (3), von dem der ständig angetriebenen Räder (2) durch einen Antriebsstrang abgezweigt ist, in dem mindestens eine Schaltkupplung (9) angeordnet ist, die abhängig vom Antriebszustand geöffnet oder geschlossen wird. Das Öffnen und Schließen erfolgt so, daß dann, wenn der Leistungsfluß, errechnet aus Drehmomentrichtung und Drehmoment größer als Null wird, die Schaltkupplung geschlossen bleibt. Dann, wenn der Leistungsfluß kleiner Null wird, wird die Schaltkupplung geöffnet. Sie bleibt so lange geöffnet, solange die Drehzahl des anzutreibenden Kupplungsteiles größer ist als die des treibenden Kupplungsteiles. Sie wird ausgehend vom geöffneten Zustand, dann, wenn das treibende Kupplungsteil mit größerer Drehzahl rotiert als das anzutreibende Kupplungsteil, geschlossen. Hierdurch wird immer dann, wenn Traktionsbedarf besteht, eine Zuschaltung der Vorderräder bewirkt und dann, wenn die Gefahr von Verspannungen besteht, die Drehmomentübertragung unterbrochen.

## Beschreibung

Die Erfindung betrifft ein Verfahren zur Steuerung der Zu- und Abschaltung des Vierradantriebes eines Fahrzeuges, insbesondere eines Traktors, sowie eine Antriebsanordnung zur Durchführung des Verfahrens, wobei der Antrieb für die nicht ständig angetriebenen, gelenkten Räder von dem der ständig angetriebenen Räder durch einen Antriebsstrang abgezweigt ist, in dem eine Schaltkupplung angeordnet ist, die abhängig vom Antriebszustand geschlossen oder geöffnet wird.

Es ist bekannt, die Schaltkupplung bei Überschreiten eines bestimmten Grenzwinkels des Einschlags der gelenkten Vorderräder zu öffnen und damit den Vierradantrieb zu unterbrechen. Wird der Grenzwinkel wieder unterschritten, wird die Kupplung geschlossen und schaltet den Antrieb der Vorderräder zu.

Der Nachteil bei dieser Ausbildung und Verfahrensweise ist, daß unabhängig davon, ob ein Schlupf an den ständig angetriebenen Hinterrädern vorhanden ist, der die Zuschaltung der Vorderräder zur Verbesserung der Traktionsverhältnisse günstig erscheinen ließe oder nicht, nur über den Lenkwinkelschalter die Ein- und Ausschaltung erfolgt. Es ist somit keine optimale Nutzung des Antriebs möglich.

Der Erfindung liegt die Aufgabe zugrunde, ein Verfahren zur Steuerung der Zu- und Abschaltung des Vierradantriebs eines Fahrzeuges, insbesondere eines Traktors, und eine Antriebsanordnung zur Ausübung dieses Verfahrens vorzuschlagen, welche eine verbesserte Nutzung des Antriebs des Fahrzeuges und damit eine verbesserte Traktion gewährleisten und darüberhinaus nur dann eine Traktionsunterbrechung bewirken, wenn die Gefahr der Verspannung im Antriebsstrang gegeben ist.

Diese Aufgabe wird erfindungsgemäß durch ein Verfahren gelöst, nach dem dann, wenn der Leistungsfluß, errechnet aus Drehmomentrichtung und Drehrichtung größer als Null ist, die Schaltkupplung geschlossen bleibt, daß dann, wenn der Leistungsfluß kleiner Null wird, die Schaltkupplung geöffnet wird, daß die Schaltkupplung, solange die Drehzahl des anzutreibenden Kupplungsteiles größer ist als die des treibenden Kupplungsteiles, geöffnet bleibt und daß die Schaltkupplung ausgehend vom geöffneten Zustand dann, wenn das treibende Kupplungsteil mit größerer Drehzahl rotiert als das anzutreibende Kupplungsteil, geschlossen wird.

Ein Vorteil bei dieser Verfahrensweise ist, daß bei Vorlauf der gelenkten Räder und Aufbrauch desselben bei Kurvenfahrten Verspannungen durch Abschalten der gelenkten Räder verhindert werden. Dabei wird die Größe des bei Geradeauslauf vorhandenen Vorlaufes automatisch berücksichtigt. Der Allrad schaltet sich aber bei Bedarf von Traktion in einer Kurve automatisch zu. Es tritt ein Abschalten auch dann ein, wenn bei unterschiedlicher oder unterschiedlich abgenutzter Bereifung sich Veränderungen ergeben, die zu einer Verspannung führen könnten. Wenn durch Reifenwahl oder Reifenabnutzung Gleichlauf oder Nachlauf des anzutreibenden Kupplungsteiles eintritt, wird immer dann der Antrieb der gelenkten Räder zugeschaltet, wenn diese zur Traktion beitragen können und es wird abgeschaltet, wenn nicht traktionswirksame Verspannungen eintreten können.

In weiterer Ausgestaltung der Erfindung ist vorgesehen, daß zur Errechnung des Leistungsflusses die Schaltkupplung in Zeitintervallen kurzzeitig geöffnet wird und die Drehzahlen von treibendem und anzutreibendem Kupplungsteil gemessen werden und daß der Leistungsfluß als größer Null angesetzt wird, wenn das treibende Kupplungsteil schneller rotiert als das anzutreibende Kupplungsteil.

Die relative Verdrehung kann genutzt werden, um festzustellen, ob die Schaltkupplung entweder ganz zu öffnen oder wieder für einen weiteren Zeitraum zu schließen ist. Wenn nämlich die Drehzahl des treibenden Kupplungsteiles größer ist als die des anzutreibenden Kupplungsteiles, besteht weiterhin Bedarf zur Traktionsverbesserung durch Zuschaltung der nicht ständig angetriebenen Räder, beispielsweise der Vorderräder. Für den Fall, daß die Drehzahl des anzutreibenden Kupplungsteiles größer ist, als die des treibenden Kupplungsteiles, kommt es zu Verspannungen. In diesem Fall wird die Schaltkupplung geöffnet.

In Ausgestaltung des erfindungsgemäßen Verfahrens ist alternativ vorgesehen, daß dann, wenn der Leistungsfluß, errechnet aus Drehmomentrichtung und Drehrichtung größer als Null ist, die Schaltkupplung geschlossen bleibt, daß dann, wenn der Leistungsfluß kleiner Null wird, die Schaltkupplung bis auf ein Restmoment geöffnet wird, und solange geöffnet bleibt, bis der Leistungsfluß des Restmomentes kleiner Null wird und daß dann, wenn der Leistungsfluß größer Null wird, die Schaltkupplung geschlossen wird.

Eine erste Antriebsanordnung zur Durchführung des erfindungsgemäßen Verfahrens ist dadurch gekennzeichnet, daß der Schaltkupplung ein Momentenwirkrichtungsschalter und ein Drehrichtungssensor zugeordnet sind, die bei Drehmomentrichtungsumkehr oder Drehrichtungsumkehr einen Schaltimpuls zur Öffnung der Schaltkupplung auslösen, und Mittel vorhanden sind, die bei schnellerer Rotation des treibenden Kupplungsteiles gegenüber dem anzutreibenden Kupplungsteil einen Schaltimpuls zum Schließen der Schaltkupplung auslösen.

Bei geschlossener Schaltkupplung erkennt der Momentenwirkrichtungsschalter die Momentenrichtung und öffnet bei negativem Leistungsfluß die Schaltkupplung. Zusätzlich ist ein Drehrichtungssensor vorhanden. Es werden die Wirkrichtung der Drehbewegung und des anliegenden Drehmomentes verglichen. Bei unterschiedlicher Wirkrichtung wird ein Schaltimpuls zur Öffnung der Schaltkupplung ausgelöst.

Alternativ ist vorgeschlagen, daß ein Momentenwirkrichtungsschalter vorhanden ist, der zwei kodierte Scheiben, Zahnscheiben oder dgl. umfaßt und je ein Stellungsaufnehmer vorgesehen sind, die die Signalfolge der beiden Scheiben bezogen auf die Drehrichtung erfassen und in einer nachfolgenden Auswerteeinheit aus der Signalfolge die Leistungsrichtung ermittelt wird.

Dabei können die beiden Zahnscheiben zur Drehzahlerfassung genutzt werden.

Ein Momentenwirkrichtungsschalter, der für den Einsatz im Zusammenhang mit einer Antriebsanordnung nach dieser Erfindung geeignet ist, ist in der deutschen Patentanmeldung P 41 34 659.9 vom 19.10.1991 offenbart.

Für eine weitere Ausführungsform der Erfindung ist vorgeschlagen, daß dem treibenden und dem anzutreibenden Kupplungsteil der Schaltkupplung je ein Drehzahlmesser zugeordnet ist, daß eine Schalteinrichtung vorhanden ist, welche die Schaltkupplung in Zeitintervallen kurzzeitig öffnet, daß ein Vergleicher vorhanden ist, der die von den Drehzahlmessern festgestellten Drehzahlen miteinander vergleicht und der einen Schaltimpuls zum Öffnen der Schaltkupplung auslöst, wenn das anzutreibende Kupplungsteil eine höhere Drehzahl aufweist als das treibende Kupplungsteil und der einen Schaltimpuls zum erneuten Schließen der Schaltkupplung auslöst, wenn das anzutreibende Kupplungsteil eine gleiche oder geringere Drehzahl als das treibende Kupplungsteil aufweist.

Eine solche Lösung ist besonders günstig im Zusammenhang mit Reibkupplungen als Schaltkupplungen vorzusehen. Dabei kann zusätzlich eine Regeleinheit mit einer Motoransteuerung vorgesehen sein, über welche die Kupplung geschlossen und geöffnet wird. Wird im Zeitintervall der Öffnung der Kupplung festgestellt, daß Schlupf insofern vorhanden ist, als das treibende Kupplungsteil schneller rotiert als das anzutreibende Kupplungsteil, erfolgt ein erneutes Schließen der Kupplung mit einer Erhöhung der Anpreßkraft, um ein höheres Kupplungsmoment übertragen zu können. Dieser Vorgang kann so häufig wiederholt werden, bis Schlupffreiheit gegeben ist, das heißt, daß die gleichen Drehzahlen am treibenden und am anzutreibenden Kupplungsteil anliegen. In Ausgestaltung kann vorgesehen werden, anschließend die Anpreßkraft in Stufen herabzusetzen. Ferner ist von Vorteil, daß die Reibkupplung einen Ausgleich bei Überlast schafft, indem Schlupf entsteht.

Alternativ kann die Schaltkupplung als Klauenkupplung gestaltet sein. Ist eine gleiche Teilung bezüglich Klauen und Lücken vorhanden, ist eine Nutzung als Sensorteil möglich.

Ferner ist vorgesehen, daß jedem der beiden gelenkten Räder eine Schaltkupplung zugeordnet ist. Hierdurch kann das Achsdifferential der Achse mit den gelenkten Rädern ersetzt werden.

Das erfindungsgemäße Verfahren und verschiedene alternative Antriebsanordnungen sind anhand der beigefügten Zeichnung beschrieben.

Es zeigt
- Figur 1: schematisch einen Traktor mit Vierradantrieb und einer an das Getriebe angeschlossenen Schaltkupplung und mit dieser zusammenwirkenden Schalteinrichtung,
- Figur 2: schematisch einen Traktor mit Vierradantrieb und einer Schaltkupplung je Vorderrad,
- Figur 3: ein Blockdiagramm für den Regelkreis für eine erste Verfahrensweise mit einem Drehmomentwirkrichtungsschalter,
- Figur 4: ein Blockdiagramm für den Regelkreis einer zweiten Verfahrensweise mit einer Reibkupplung in der Antriebsanordnung, die in geschlossener Position einen Restschlupf aufweist und
- Figur 5: ein Blockdiagramm für den Regelkreis einer weiteren Verfahrenweise, bei der die Schaltkupplung, die als Reibkupplung gestaltet ist, in Intervallen bis auf ein Restmoment geöffnet wird.

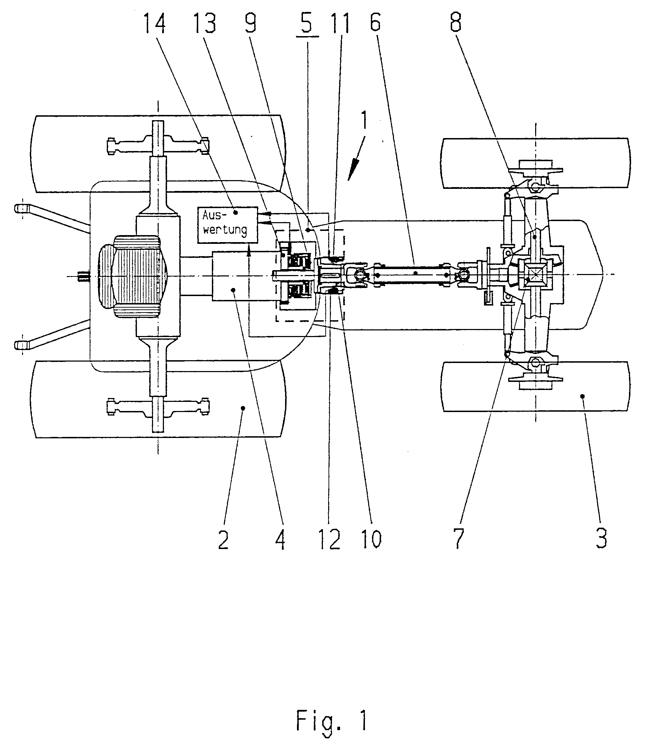

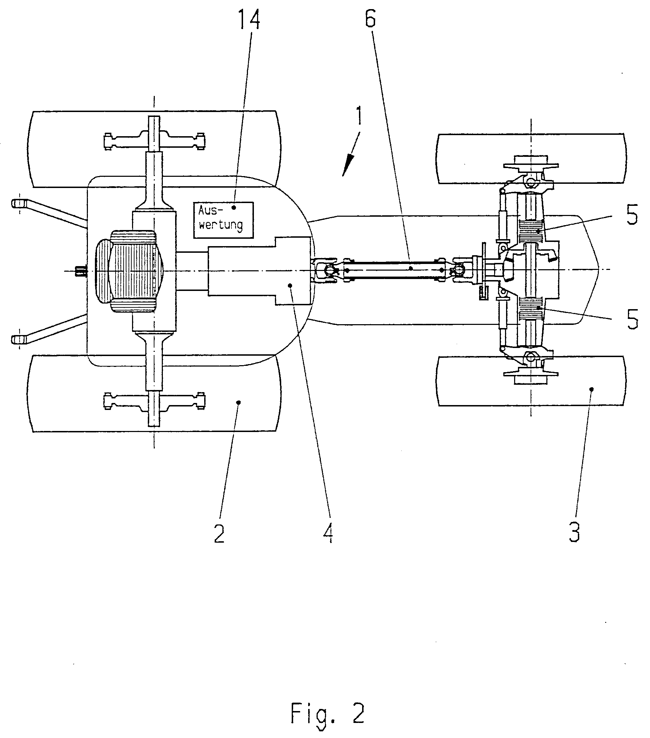

Der in den Figuren 1 und 2 dargestellte Traktor ist mit 1 bezeichnet. Die beiden Hinterräder 2 werden ständig angetrieben, während die beiden Vorderräder 3 selektiv angetrieben werden. Die selektive Zu- bzw. Abschaltung der Vorderräder 3 erfolgt über eine Schalteinrichtung 5.

Bei der Ausbildung gemäß Figur 1 ist die Schalteinrichtung 5 zentral für beide Vorderräder 3 unmittelbar an das Getriebe 4 angeschlossen. Von der Schalteinrichtung 5 wird das Drehmoment über eine Längswelle 6 auf das Vorderachsdifferential 7 und von diesem über Antriebswellen 8 auf die Vorderräder 3 übertragen.

Bei der Ausbildung gemäß Figur 2 ist jedem der Vorderräder 3 eine Schalteinrichtung 5 zugeordnet.

Die Schalteinrichtung 5 umfaßt, wie aus Figur 1 ersichtlich, eine Schaltkupplung 9, einen Momentenwirkrichtungsschalter 10 mit Sensoren 11,12 sowie einen Drehzahl- oder Drehrichtungssensor 13. Einer der beiden Sensoren 11,12, beispielsweise der Sensor 11, dient gleichzeitig oder alternativ als Drehzahlsensor.

Die Informationen der Sensoren 11,12,13 werden einer Auswerteeinheit 14 zugeführt, welche daraus, wenn erforderlich, einen Schaltimpuls für die Betätigung der Schaltkupplung 9 gemäß Figur 1 bzw. der beiden Schaltkupplungen 9 gemäß Figur 2 bewirkt.

Bei der Beschreibung der nach der Erfindung vorgesehenen Verfahrensweisen wird jeweils auf die sich aus den Blockdiagrammen ergebenden Regelkreise und die Figuren 1 bzw. 2 Bezug genommen.

Dabei ist unter n-VA die Drehzahl, die dem anzutreibenden Kupplungsteil von den Vorderrädern ausgezwungen wird, zu verstehen. Zur Messung der Drehzahlen n-VA dient der Sensor 11, der gleichzeitig dem Momentenwirkrichtungsschalter 10 zugeordnet sein kann. Bei geöffneter Schaltkupplung 9 werden die Vorderräder 3 durch den Untergrund, auf dem sie abrollen, angetrieben. Diese Drehzahl wird vom Sensor 11 (n-VA) ermittelt. Gleichzeitig dienen die beiden Sensoren 11,12 dazu, bei geschlossener Schaltkupplung 9 die Leistungsrichtung festzustellen. Die Sensoren 11,12 können über die von ihnen beispielsweise im Zusammenwirken mit Zahnscheiben ermittelte Signalfolge Signale an eine Auswerteeinrichtung 14 weitergeben. Über diese läßt sich feststellen, ob aufgrund der Antriebsverhältnisse, unter Berücksichtigung der Reifengröße, des Untergrundes, des Lenkwinkeleinschlags und/oder des Übersetzungsverhältnisses der Hinterachse zur Vorderachse sich relative Drehverhältnisse einstellen, die sich in einem Zurückeilen oder Voreilen der Vorderräder bemerkbar machen und damit ausdrücken, ob ein Leistungsbedarf zum Vortrieb an den Vorderrädern gegeben ist oder ob Verspannungen eintreten können.

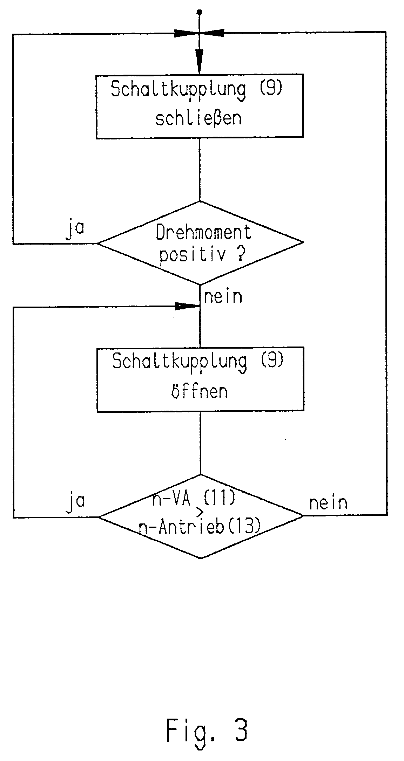

Bei der ersten Verfahrensweise, wie sie sich aus dem in Figur 3 ersichtlichen Regelkreis ergibt, wird bei geschlossener Schaltkupplung 9 durch die Auswerteeinheit 14 durch Auswertung der Signale der beiden Sensoren 11,12 festgestellt, ob ein Drehmoment von dem Getriebe 4 über die Schaltkupplung 9 mit Leistungsfluß zu den Vorderrädern 3 hin übertragen wird.

Ändert sich die Signalfolge, die von den Sensoren 11,12 des Momentenwirkrichtungsschalters 10 an die Auswerteeinheit 14 weitergegeben wird, ist auf eine Änderung der Drehmomentwirkrichtung zu schließen. Wenn die vom Sensor 13 weitergegebene Drehrichtung weiterhin ungeändert ansteht, ermittelt die Außenwerteeinheit in diesem Fall eine Leistungsrichtungsumkehr. Da dies zu Verspannungen im Antriebsstrang des Traktors führen kann, veranlaßt die Auswerteeinrichtung 14 ein Öffnen der Schaltkupplung 9. Die Antriebsverbindung des Getriebes 4 zu den Vorderrädern 3 wird unterbrochen.

Stellt bei geöffneter Schaltkupplung 9 die Auswerteeinheit 14 durch Vergleichen der durch die Sensoren 11 und 13 ermittelten Drehzahlen des treibenden Kupplungsteiles der Schaltkupplung 9, das mit dem Ausgang des Getriebes 4 verbunden ist und dem anzutreibenden Kupplungsteil der Schaltkupplung 9, das mit den Vorderrädern 4 verbunden ist, fest, daß das anzutreibende Kupplungsteil schneller rotiert als das treibende Teil, d.h. n-VA > n-Antrieb ist, veranlaßt diese ein weiteres Halten der Schaltkupplung 9 in der geöffneten Position. Wird jedoch bei geöffneter Schaltkupplung 9 aufgrund der Signale der Sensoren 11,13 festgestellt, daß das mit dem Getriebe 4 verbundene treibende Teil der Schaltkupplung 9 schneller rotiert als das mit den Vorderrädern verbundene Kupplungsteil der Schaltkupplung, d.h. N-Antrieb größer N-VA, dann veranlasst die Auswerteeinheit 14 ein Schließen der Schaltkupplung 9, weil Traktion an den Vorderrädern 3 benötigt wird.

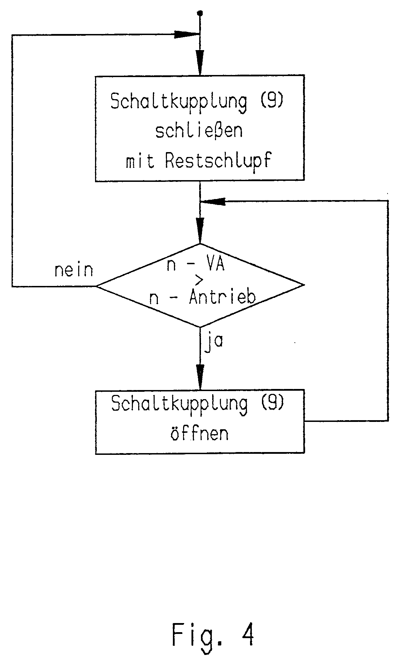

In Figur 4 ist der Regelkreis einer alternativen Verfahrensweise als Blockdiagramm dargestellt. Die als Reibkupplung gestaltete Schaltkupplung 9 wird so geregelt, daß im geschlossenen Zustand noch ein Restschlupf vorhanden ist. Dies heißt, daß der Traktionsbedarf für die Vorderräder 3 - Drehmomentbedarf am anzutreibenden Teil der Schaltkupplung - größer ist als das über die Schaltkupplung 9 weiterleitbare Drehmoment.

Für diese Vorgehensweise sind nur zwei Drehzahlsensoren erforderlich, beispielsweise die Sensoren 11 und 13. Wird durch die der Auswerteeinheit 14 zugeführten Signale der Sensoren 11,13 festgestellt, daß die Drehzahl des anzutreibenden Teils der Schaltkupplung 9 gleichschnell rotiert wie das treibende Teil der Schaltkupplung n-VA gleich N-Antrieb, dann wird die Schaltkupplung 9 geöffnet. Wird festgestellt, daß das anzutreibende Kupplungsteil der Schaltkupplung 9 langsamer rotiert als der treibende Teil der Schaltkupplung 9 - n-VA kleiner n-Antrieb -, dann wird die Schaltkupplung 9 bis auf ein Restmoment geöffnet. In einer Ausgestaltung kann auch ein gestuftes Regeln zum Öffnen und Schließen erfolgen, wobei die Regelstufen vorgegeben werden.

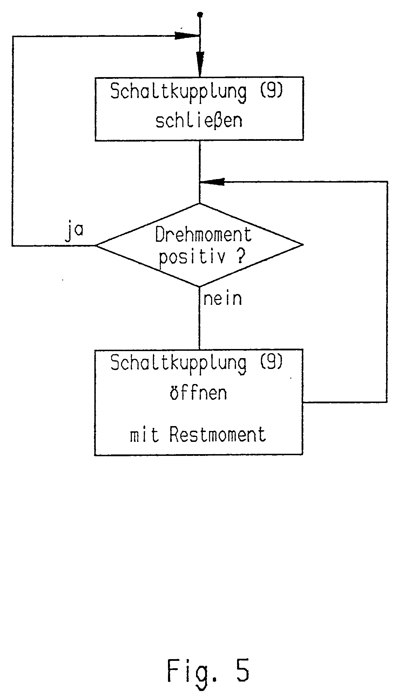

Bei der sich aus dem Blockdiagramm gemäß Figur 5 ergebenden Verfahrensweise wird in Verbindung mit der Auswerteeinheit 14 nur der sich aus Figur 1 ergebende Momentenwirkrichtungsschalter 10 mit den Sensoren 11 und 12 benötigt, da die Schaltkupplung 9 in Zeitintervallen bis auf ein Restmoment geöffnet wird. Das zwischen dem treibenden und dem anzutreibenden Teil der Schaltkupplung 9, die als Reibkupplung gestaltet ist, zu übertragende Restmoment, wird so klein gewählt, daß das über die Vorderräder 3 auf das anzutreibende Teil der Schaltkupplung 9 aufgebrachte Drehmoment eine Relativverstellung der beiden Teile der Schaltkupplung 9 einandergegenüber erlaubt. Wird festgestellt, daß die Leistungsrichtung sich so eingestellt hat, daß das anzutreibende Teil der Schaltkupplung 9 das eigentlich treibende Teil der Schaltkupplung 9 treiben möchte, die Schaltkupplung 9 bis auf das im Restmoment in geöffneter Position gehalten wird. Trifft dies nicht zu, wird die Schaltkupplung 9 geschlossen, um nach einem Zeitintervall wieder kurzzeitig geöffnet zu werden. Der Regelkreis wird also erneut durchlaufen.

### Bezugszeichenliste

- 1: Traktor
- 2: Hinterräder
- 3: Vorderräder
- 4: Getriebe
- 5: Schalteinrichtung
- 6: Längswelle
- 7: Vorderachsdifferential
- 8: Antriebswelle
- 9: Schaltkupplung
- 10: Momentenwirkrichtungsschalter
- 11,12: Sensoren
- 13: Drehzahlsensor/Drehrichtungssensor
- 14: Auswerteeinheit

## Patentansprüche

1. Verfahren zur Steuerung der Zu- und Abschaltung des Vierradantriebes eines Fahrzeuges, insbesondere eines Traktors, bei dem der Antrieb für die nicht ständig angetriebenen, gelenkten Räder von dem der ständig angetriebenen Räder durch einen Antriebsstrang abgezweigt ist, in dem mindestens eine Schaltkupplung angeordnet ist, die abhängig vom Antriebszustand geschlossen oder geöffnet wird,
dadurch gekennzeichnet,
daß dann, wenn der Leistungsfluß, errechnet aus Drehmomentrichtung und Drehrichtung größer als Null ist, die Schaltkupplung geschlossen bleibt, daß dann, wenn der Leistungsfluß kleiner Null wird, die Schaltkupplung geöffnet wird, daß die Schaltkupplung, solange die Drehzahl des anzutreibenden Kupplungsteiles größer ist als die des treibenden Kupplungsteiles, geöffnet bleibt und daß die Schaltkupplung ausgehend vom geöffneten Zustand dann, wenn das treibende Kupplungsteil mit größerer Drehzahl rotiert als das anzutreibende Kupplungsteil, geschlossen wird.

2. Verfahren nach Anspruch 1,
dadurch gekennzeichnet,
daß zur Errechnung des Leistungsflusses die Schaltkupplung in Zeitintervallen kurzzeitig geöffnet wird und die Drehzahlen von treibendem und anzutreibendem Kupplungsteil gemessen werden und daß der Leistungsfluß als größer Null angesetzt wird, wenn das treibende Kupplungsteil schneller rotiert als das anzutreibende Kupplungsteil.

3. Verfahren nach Anspruch 1,
dadurch gekennzeichnet,
daß dann, wenn der Leistungsfluß kleiner Null wird, die Schaltkupplung bis auf ein Restmoment geöffnet wird, und solange geöffnet bleibt, wie der Leistungsfluß des Restmomentes kleiner Null ist und daß dann, wenn der Leistungsfluß des Restmomentes größer Null wird, die Schaltkupplung geschlossen wird.

4. Antriebsanordnung zur Durchführung des Verfahrens nach einem oder mehreren der Ansprüche 1 und 3,
dadurch gekennzeichnet,
daß der Schaltkupplung (9) ein Momentenwirkrichtungsschalter (10) und ein Drehrichtungssensor (13) zugeordnet sind, die bei Drehmomentrichtungsumkehr oder Drehrichtungsumkehr einen Schaltimpuls zur Öffnung der Schaltkupplung (9) auslösen, und Mittel (13,11) vorhanden sind, die bei schnellerer Rotation des treibenden Kupplungsteiles gegenüber dem anzutreibenden Kupplungsteil einen Schaltimpuls zum Schließen der Schaltkupplung (9) auslösen.

5. Antriebsanordnung zur Durchführung des Verfahrens nach einem der Ansprüche 1 oder 3,
dadurch gekennzeichnet,
daß ein Momentenwirkrichtungsschalter (10) vorhanden ist, der zwei kodierte Scheiben, Zahnscheiben oder dgl. umfaßt und je ein Stellungsaufnehmer (11,12) vorgesehen sind, die die Signalfolge der beiden Scheiben erfassen und in einer nachgeschalteten Auswerteeinheit (14) aus der Signalfolge die Leistungsrichtung ermittelt wird.

6. Antriebsanordnung nach Anspruch 5,
dadurch gekennzeichnet,
daß mindestens eine der beiden Zahnscheiben als Drehzahlmesser dient.

7. Antriebsanordnung zur Durchführung des Verfahrens nach Anspruch 2,
dadurch gekennzeichnet,
daß dem treibenden und dem anzutreibenden Kupplungsteil der Schaltkupplung (9) je ein Drehzahlmesser (11,13) zugeordnet ist, daß eine Schalteinrichtung vorhanden ist, welche die Schaltkupplung (9) in Zeitintervallen kurzzeitig öffnet, daß ein Vergleicher (14) vorhanden ist, der die von den Drehzahlmessern (11,13) festgestellten Drehzahlen miteinander vergleicht und der einen Schaltimpuls zum Öffnen der Schaltkupplung (9) auslöst, wenn das anzutreibende Kupplungsteil eine höhere Drehzahl aufweist als das treibende Kupplungsteil und der einen Schaltimpuls zum erneuten Schließen der Schaltkupplung (9) auslöst, wenn das anzutreibende Kupplungsteil eine gleiche oder geringere Drehzahl als das treibende Kupplungsteil aufweist.

8. Antriebsanordnung nach Anspruch 7,
dadurch gekennzeichnet,
daß die Schaltkupplung (9) als Reibkupplung ausgebildet ist.

9. Antriebsanordung nach einem der Ansprüche 4 und 5,
dadurch gekennzeichnet,
daß die Schaltkupplung (9) als Klauenkupplung ausgebildet ist.

10. Antriebsanordnung nach einem oder mehreren der Ansprüche 4 bis 9,
dadurch gekennzeichnet,
daß jedem der beiden gelenkten Räder eine Schaltkupplung (9) zugeordnet ist.
